# EUROPEAN PATENT SPECIFICATION

(11) **EP 3 245 031 B1**
(45) Date of publication and mention of the grant of the patent: **02.01.2019**
(21) Application number: 16701066.9
(22) Date of filing: 12.01.2016
(51) Int. Cl.: B26B 21/22, B26B 21/40

(54) **DISPOSABLE RAZOR**
WEGWERFRASIERER
RASOIR JETABLE

(30) Priority: 13.01.2015 GB 201500491; 28.07.2015 GB 201513298
(43) Date of publication of application: 22.11.2017
(73) Proprietor: Rathbone Razors Ltd., Barham, Kent CT4 6NU (GB)
(72) Inventor: BRUCE, David, Barham Kent CT4 6NU (GB); ABLE, Stuart, Barham Kent CT4 6NU (GB)
(74) Representative: Morrall, Jonathan Ian McLachlan
(86) International application number: PCT/GB2016/050065
(87) International publication number: WO 2016/113553

(56) References cited:
- EP-A1- 2 226 166
- GB-A- 2 248 033
- US-A- 3 950 848
- US-A- 4 850 107

## Description

### FIELD OF INVENTION

The present disclosure relates to personal disposable razors. In particular, but not exclusively, the present invention relates to an ergonomic razor that has the ability to provide improved control, improved accuracy, a close shave and reduced irritation when shaving.

### BACKGROUND

Current disposable razors are generally of a long stick design with a head attached that houses the razor blades. With existing designs, the head may be a replaceable, disposable head that is attached to the stick by a clipping mechanism. The blade head is located at one end of the stick and the user holds the stick at the opposite end. This limits the amount of control and the ability to regulate pressure that can be applied to the blade head when in contact with the face or neck, reducing the quality of the shave.

US 3950848 discloses a safety razor comprising a razor blade support member connected to a handle through a linkage assembly. The linkage assembly maintains the angle of the razor blade support member in relation to the handle at substantially a constant angle to prevent the razor blade from moving in a circular path.

GB 2248033 discloses a shaving device. The A shaving device comprises a head, having standard blades, a neck portion and a hollow handle.

### SUMMARY OF INVENTION

Embodiments of the present disclosure attempt to mitigate at least some of the above-mentioned problems.

In accordance with an aspect of the disclosure there is provided a razor blade head, comprising a razor blade element, a bracket mounted to the razor blade element and a manual control element configured to enable a user to apply from a side of the bracket opposite to the razor blade element, the force transferred from the manual control element to the razor blade element via the bracket, wherein the bracket is configured to define an opening between the manual control element and the razor blade element. This configuration may allow the user to place his or her fingers on the manual control element and apply and/or regulate pressure to the razor blade element via the bracket. This can improve the closeness and accuracy of the shave.

The razor blade head allows a user to place his or her fingers on the manual control element and apply gentle pressure to the razor blade element via the bracket, thereby improving the closeness, quality and accuracy of the shave with less irritation.

In accordance with a further aspect of the disclosure there is provided a razor head, comprising a laser cutting element, a bracket mounted to the laser cutting element, and a manual control element configured to enable a user to apply force from a side of the bracket opposite to the laser cutting element, the force transferred from the manual control element to the laser cutting element via the bracket, wherein the bracket is configured to define an opening between the manual control element and the laser cutting element.

The razor blade element may comprise a frame and a blade portion. The frame may be configured to support the blade portion. The razor blade element may comprise at least one razor blade. When the at least one razor blade is a plurality of razor blades, the razor blades may be parallel to each other. The at least one razor blade may be stationary relative to the bracket. The razor blade construction may be made from any currently used materials, such as steel, carbon or sapphire.

The bracket may be mounted to the frame of the razor blade element. The bracket may be connected to the manual control element on a side of the bracket that is opposite to the razor blade element. The bracket may comprise at least one column connected to the manual control element. The bracket may be of a substantially E-shaped cross section or a substantially M-shaped cross section. The bracket may be configured to define an opening large enough to allow flow of water through the opening and to allow cut hair to be washed out, thereby preventing clogging. The bracket, razor blade element and/or the manual control element may comprise a precision razor blade mounted on a top surface.

The manual control element may be a pad. The manual control element may comprise at least one groove for receiving part of a finger of a user. The manual control element may comprise two grooves for receiving second (index) and third (middle) fingers of the user, respectively. The manual control element may be inflatable. The manual control element may be configured to receive a fluid. The fluid may be air or water. The manual control element may comprise holes for dispensing fluid in a direction of the razor blade element. The manual control element may be configured to dispense the fluid by the application of pressure to the manual control element.

The bracket and the razor blade element may be formed as an integral piece. Alternatively, the bracket may be mounted to the razor blade element by an adhesive or a clipping mechanism. The manual control element and the bracket may be formed as a single piece. The bracket may comprise a clipping mechanism configured to connect the manual control element and the razor blade element. Furthermore, the manual control element, the bracket and the razor blade head may be formed as a single integrated unit. The manual control element, the bracket and the razor blade element may be joined by an adhesive. The razor blade element may comprise at least one blade comprising sapphire.

A razor may comprise the razor blade head and a handle. The razor blade head may be mounted on the handle at a first end of the handle, the first end configured to sit between the thumb and fourth (ring) finger of a user. The handle may have a second end, opposite to the first end, the second end configured to allow the handle to stand upright on a substantially horizontal surface. The second end of the handle may be substantially flat. Alternatively, the second end of the handle may be substantially concave. The second end of the handle may be configured to receive a fifth (little) finger of the user. The second end of the handle may comprise at least one foot configured to support the handle. The at least one foot may be a suction pad.

The handle may have a first, concave surface and a second, convex surface, the first and second surfaces being between the first and second ends of the handle, such that the handle has an asymmetrically curved profile. This may allow the placement of index and middle fingers on the manual control element whilst the handle sits in the palm of the hand. The second, convex surface of the handle may be configured to receive the thumb of the user. The second, convex surface of the handle may have a well configured to receive the thumb of the user.

The razor blade head may be mounted on the handle via a neck portion. The neck portion may be connected to any component of the razor blade head. The neck portion may be connected to the razor blade element. The neck portion may be connected to the frame of the razor blade element. The neck portion may be connected to the razor blade head by a clipping mechanism. The neck portion may be connected to the razor blade element by a clipping mechanism. The manual control element may be configured to allow rotation of the razor blade head relative to the handle, preferably without interference. The razor blade head may further comprise a shaving gel dispenser.

### BRIEF DESCRIPTION OF THE DRAWINGS

Exemplary embodiments of the disclosure shall now be described with reference to the drawings in which:
Figure 1A shows a disposable razor;
Figure 1B shows another view of the disposable razor;
Figure 2A shows a bracket of a disposable razor;
Figure 2B shows a view of the assembly of a disposable razor head;
Figure 2C shows another view of the assembly of a disposable razor head;
Figure 2D shows an alternative configuration of a bracket;
Figure 2E shows an alternative configuration of a bracket and pad.
Figure 3A shows a view of a disposable razor in operation;
Figure 3B shows another view of a disposable razor in operation;
Figure 3C shows yet another view of a disposable razor in operation;
Figure 4 shows a disposable razor having an inflatable pad;
Figure 5 shows a disposable razor having an inflatable pad;

Throughout the description and the drawings, like reference numerals refer to like parts.

### DETAILED DESCRIPTION

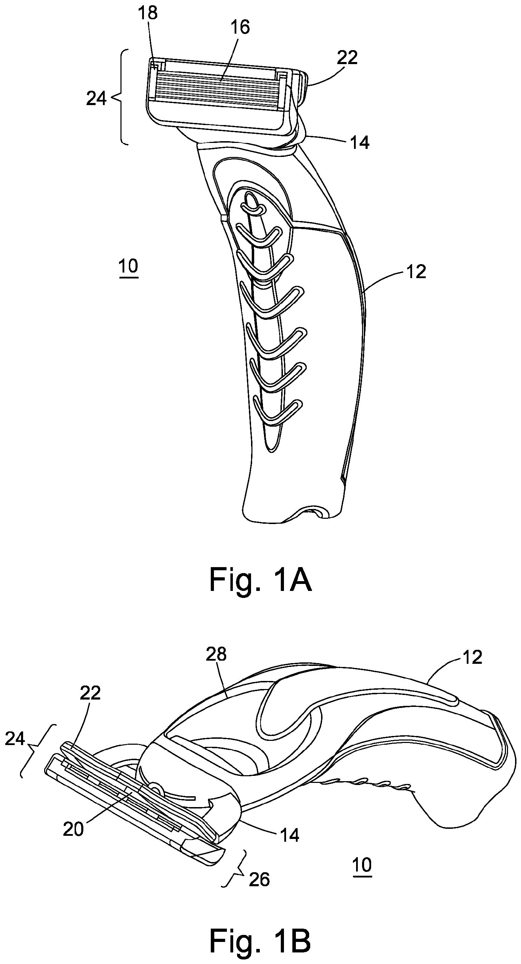

Figures 1A and 1B show a disposable razor 10. The disposable razor 10 has a handle 12, a neck 14, a blade portion 16, a frame 18, a bracket 20 and a manual control element or pad 22. The assembly of the blade portion 16, the frame 18, the bracket 20 and the pad 22 forms the head 24 of the disposable razor 10. The blade portion 16 and the frame 18 may be collectively referred to as a razor blade element 26.

The pad 22 is mounted behind the blade portion 16 and the frame 18 via the bracket 20. The pad 22 allows the user to place his or her fingers on the back of the head 24 when using the razor 10. The pad 22 is resilient such that it is comfortable for the user. Alternatively, the pad 22 may be a rigid element. The pad 22 is mounted on the back of the frame 18 by the bracket 20. The bracket 20 provides an opening that allows cut hair to wash through the back of the blade portion 16. The pad 22 is manufactured from a thermoplastic material, for example, injection moulded rubber. Other suitable materials may be used.

The blade portion 16 has a number of razor blades. Three blades are shown, but any suitable number of blades may be used. The blades of blade portion 16 are supported by the frame 18. The blades are stationary relative to the frame 18. The blades are parallel to each other. A precision blade may also be mounted on a top surface of the frame 18, bracket 20 or pad 22.

The neck 14 joins the handle 12 to the head 24. The neck 14 is connected to the handle 12 at a first end of the handle 12. The neck 14 attaches to the head 24 at the frame 18. The neck 14 is attached to the frame 18 by a clipping mechanism. The clipping mechanism may be a click-fit mechanism. The neck 14 has clipping arms that are received by slots in the frame 18. This allows the head 24 of the razor 10 to be attached and detached as necessary. Alternatively, the neck 14 may be attached to another part of the head 24, for example the bracket 20 or the pad 22. Other suitable attachment means may also be used. The neck 14 is pivoted to allow rotation of the head 24 relative to the handle 12.

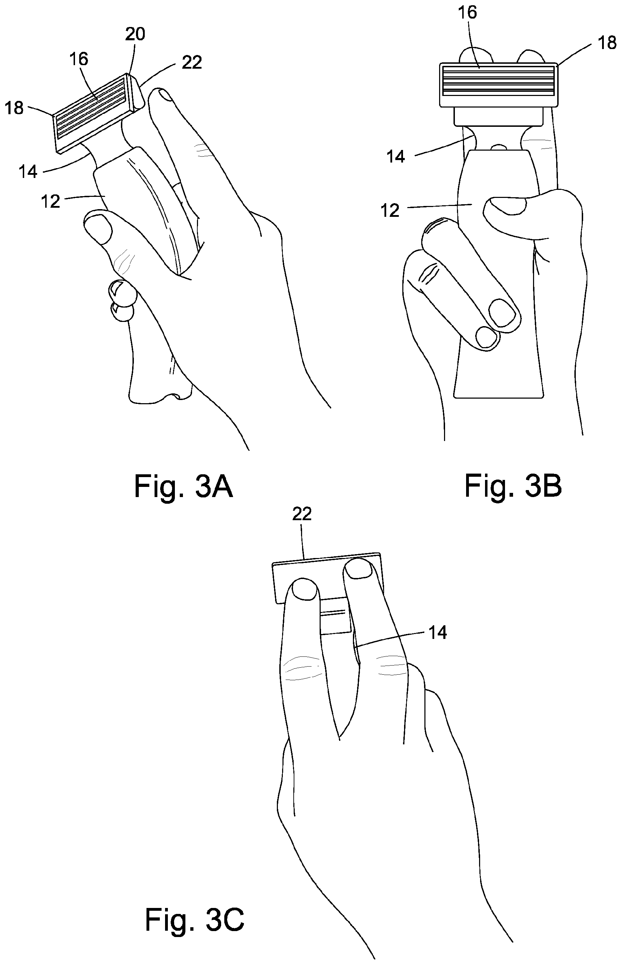

The handle 12 is wider and shorter than most existing designs. The handle 12 is ergonomically designed to sit in the palm of a user's hand (this is shown, for example, in figure 3B). In profile, one side of the handle 12 has a concave surface while the other has a convex surface. In preferred embodiments the structure of handle 12 is asymmetrically curved along an axis that runs from the first end of the handle 12 to the second end; this can follow the palm of a user's hand. This is achieved by making the curvature of the handle more pronounced towards the first end of the handle 12 than the second end. The handle 12 is manufactured from plastic or rubber. Other suitable materials, such as ceramics, metal or wood, may also be used. The handle 12 has a first end that is wider than the main body of the handle 12. This allows the first end of the handle 12 to sit comfortably between the thumb and fourth (ring) finger of the user. This provides grip and leaves the second (index) and third (middle) fingers of the user free to exert pressure on the head 24. This provides enhanced control to the razor blade head via the application of gentle pressure on the manual control element. Furthermore, the curved profile of the handle allows the user to hold the razor comfortably with fingers positioned on the pad to flexibly control the movement of the head and exert enough pressure on the pad to ensure a close and accurate shave. This combination of the handle 12 with the razor blade head 24 allows the precise application of pressure in the requisite direction, from the pad 22 and bracket 20 through to the back of the razor blade element 26, thereby improving control of the razor blade head. In one example, the pad 22 has cut outs which enable the rotation of the razor blade head to rotate relative to the handle 12.

The handle 12 also contains a hollow cavity at its interior, which allows a fluid (i.e. a liquid or a gas) that is less dense than water to be inserted. The cavity may also be filled with a solid that is less dense than water. The cavity could be filled with air or foam, for example. This allows the razor 10, when assembled, to float in order that it can be easily accessed by a user when placed in a pool of water, for example in a sink or bath.

The handle 12 has a second end, opposite to the first end. The handle 12 is shorter than current stick designs. This allows the second end to sit in the palm of a user's hand when in operation. The second end of the handle 12 is shaped to allow the handle 12 to stand unsupported on the second end. This keeps the head 24 of the razor 10 clear of any contaminated surfaces. This allows the blade portion 16 to remain clean, thereby improving personal hygiene. The second end of the handle 12 is dish-shaped in order that it may stand upright on a rim. Alternatively, the second end of the handle 12 may be flat in order to allow it to stand upright. Alternatively, the second end of the handle 12 may have one or more feet that allow the handle 12 to stand upright. The feet may be suction pads that allow the handle 12 to be attached to a surface. Other suitable configurations of the second end of the handle 12 may also be used.

In one configuration, the second end of the handle 12 is concave such that, when placed on its second end, the handle 12 is supported upright by the rim of the concave second end. Furthermore, the concave end of the handle 12 provides a drainage channel into the handle of the razor such that, when the handle 12 stands upright, water does not collect around the base of the razor, as can be seen in Figure 1A.

When the second end of the handle 12 is concave, it may be grooved to allow the placement of a user's fifth (little) finger. In this case, there is also a well, or depression, 28 on the convex side of the handle 12, towards the first end of the handle 12, for placement of the user's thumb. This can be seen in figure 1B. This improves the comfort of the shave when the user is shaving against the direction of hair growth on their face, or when the user is shaving another part of their body.

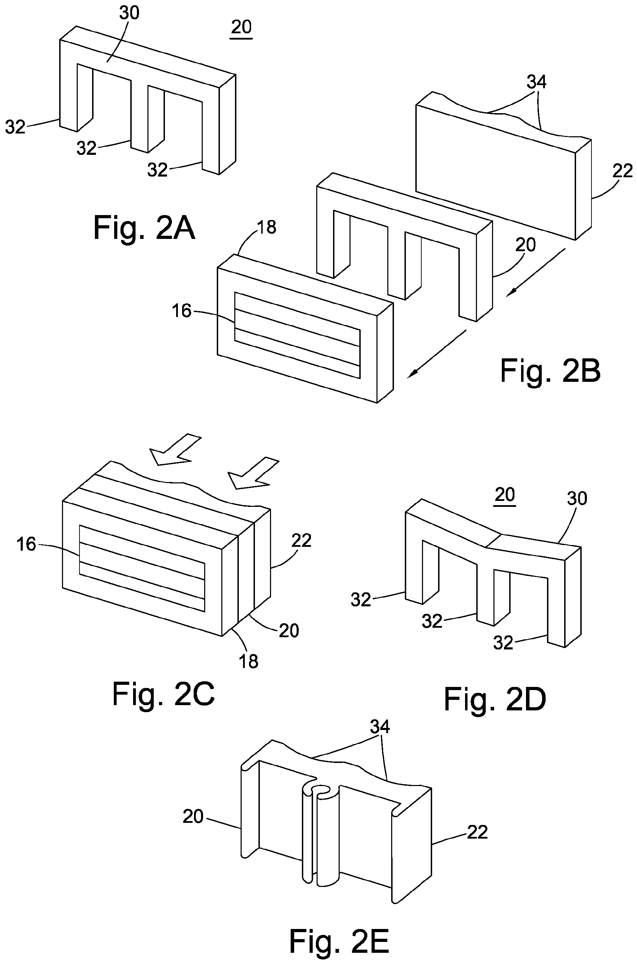

A more detailed depiction of one configuration of the head 24 of the disposable razor 10 is shown in figure 2. Figure 2A shows an isometric view of the bracket 20, with an elongate portion 30 and support columns 32. The bracket 20 is of a generally E-shaped cross section, although other suitable cross sections could be used. The support columns 32 extend from the elongate portion 30. Support columns 32 extend perpendicular to the axis of elongate portion 30. In this instance, there are three support columns 32, although any suitable number of support columns 32 may be used. The elongate portion 30 and support columns 32 are of square cross section, although any suitable cross section may be used. Alternatively, the bracket 20 may be of a generally M-shaped cross section, where the elongate portion 30 is V-shaped, with three support columns 32 extending from it. This is shown in figure 2D.

As shown in figure 2B, a first face of the E-shaped bracket 20 is affixed to the frame 18. The opposite, second face of the E-shaped bracket 20 is affixed to the pad 22. The bracket 20 is affixed to the frame 20 and/or the pad 22 by an adhesive. Other attachment means between the bracket 20 and the frame 18 and/or the pad 22, such as a clipping mechanism, are envisaged. The spaces between the support columns 32 define an opening between the blade portion 16 and frame 18 and the pad 22. Figure 2C shows an isometric view of the assembly of the head 24. The head 24 is moulded as an integral piece. Alternatively, the frame 18, the bracket 20 and/or the pad 22 may be manufactured separately. The head 24 would then be assembled from its component parts, for example, by adhesion or a clipping mechanism such as a click-fit mechanism. Alternatively, the complete head 24 may be manufactured as a single integrated component.

Figure 2E shows another configuration, where the bracket 20 and the pad 22 are formed as an integral piece. In this way, rather than an E-shaped bracket as previously described, the pad 22 clips to corresponding attachment means on the frame 18 of the razor blade element 26. This is by way of exposure clips and corresponding bars on the frame 18 and/or pad 22. These clipping means are another example of the bracket 20. This provides for a more simple assembly of the parts that make up the razor blade head 24. As can be seen from figures 2D and 2E, the opening between the blade portion 16 and the pad 22 is maintained such that cut hair may wash through the back of the blade portion 16.

In operation, the opening defined by the spaces between the razor blade element 26 and the pad 22 allows water or air to wash through the blades of blade portion 16 and clean away cut hair. The pad 22 has grooves 34 designed to receive the user's fingers when in operation. In one configuration, the pad has two grooves 34 to receive the second (index) and third (middle) fingers of the user. This improves comfort. This configuration allows the user to apply pressure to the frame 18 via the pad 22 and the bracket 20. The force is transferred from the pad 22 to the razor blade element 26 via the bracket 20. The direction of the force is shown, for example, by the arrows in figure 2C.

Handling of the razor 10 is shown in figures 3A to 3C. The configuration of the razor 10 allows the handle 12 to sit in the palm of the user's hand. In operation, the user places his or her fingers on the pad 22 mounted on the back of the frame 18. The user applies pressure to the pad 22, which is transferred through the bracket 20 to the frame 18 and the blade portion 16. As the fingers of the user are on the back of the head 24 when in operation, the user may apply more pressure to the head 24 and blade portion 16. This improves the closeness of the shave. In addition, the fingers in this position allow the user to have more control over the head 24 when shaving, improving accuracy. The pad 22 also protects the fingers of the user from the blade portion 16.

During or after shaving, the user may run water through the opening provided by the bracket 20 between the razor blade element 26 and the pad 22. The water runs onto the back of the blade portion 16. This clears any cut hair that is stuck between the blades, preventing the gaps between the blades becoming blocked. Alternatively, the user may apply water to the front face of the blade portion 16 which washes through the blades and out of the opening provided by the bracket 20.

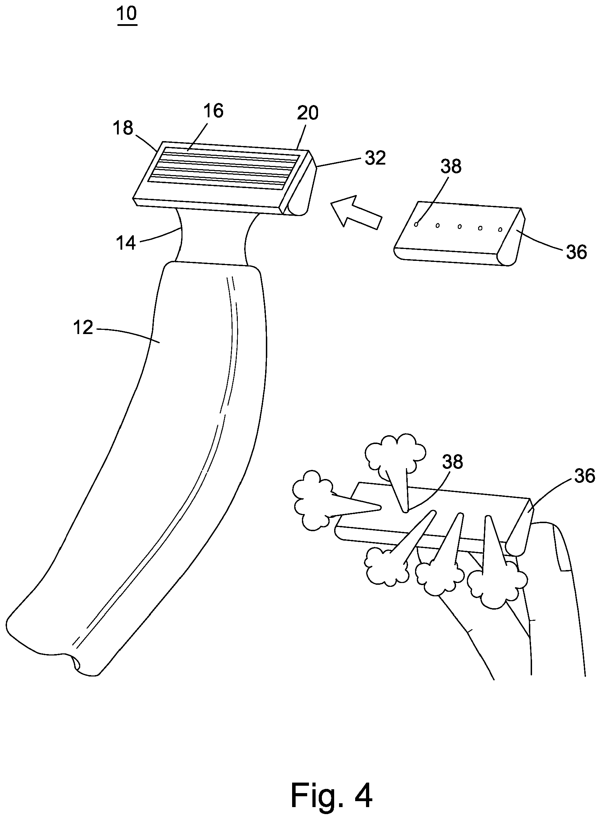

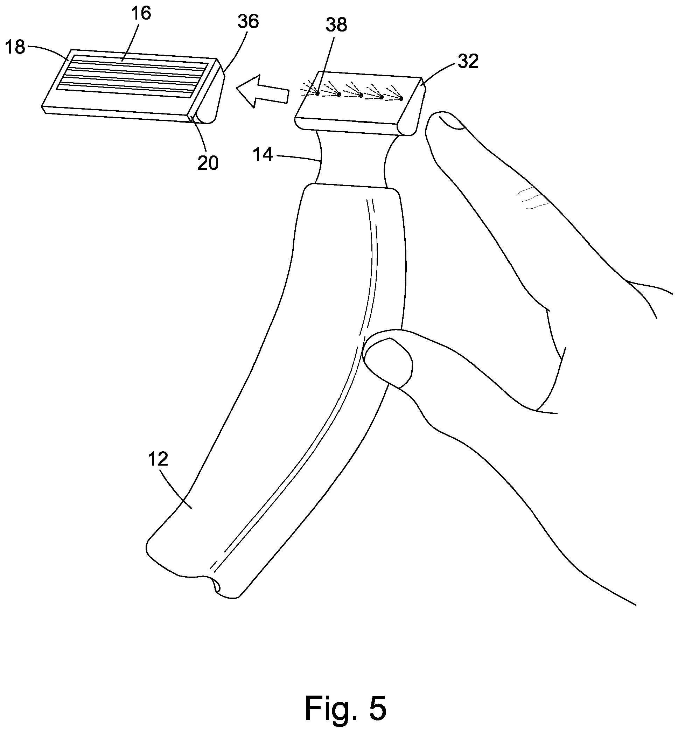

Figure 4 shows a further application of the pad 22. In this case, the pad 22 is an inflatable pad 36. The inflatable pad 36 may be self-inflating. The inflatable pad 36 has a number of holes 38 that allow air to escape from within the inflatable pad 36 when pressure is applied. Four holes are shown in figure 4, although any suitable number of holes may be used. The holes 38 allow the user to pump air from the inflatable pad 36 through the back of the blade portion 16. This clears hair that may have built up between the blades. Alternatively, the inflatable pad 36 may be filled with water, which can also be pumped through the holes 38 to clean the blades, as shown in figure 5. This can be done during the shaving process or between shaving processes, in order to clean the blades.

In a further example, the disposable razor 10 can be adapted to include a module for dispensing shaving gel. The shaving gel is stored in an internal reservoir in the handle 12. This internal reservoir is connected to the head 24 via a capillary. The gel is then dispensed from the blade portion 16 or the frame 18 via one or more nozzles. Alternatively, the shaving gel may be stored in the inflatable pad 36 and dispensed through nozzles or between the blades of the blade portion 16 via the holes 38.

In a further example, the disposable razor 10 has blades made of sapphire. Sapphire blades provide a sharper and more durable blade than commonly used materials.

In a further example, the disposable razor 10 has a laser cutting element in place of or in addition to the razor blades. Laser cutting elements provide a more accurate cutting action than mechanical blades.

## Claims

1. A razor blade head (24), comprising:
a razor blade element (26);
a bracket (20) mounted to the razor blade element; and
a manual control element (22) configured to enable a user to apply force from a side of the bracket opposite to the razor blade element, the force transferred from the manual control element to the razor blade element via the bracket;
wherein the bracket is configured to define an opening between the manual control element and the razor blade element.

2. The razor blade head (24) of claim 1, wherein the razor blade element (16) comprises a frame (18) and a blade portion (16), wherein the frame is configured to support the blade portion.

3. The razor blade head (24) of any of claims 1 or 2 wherein the bracket (20) is mounted to the frame (18) of the razor blade element (26).

4. The razor blade head (24) of any preceding claim wherein the bracket (20) is connected to the manual control element (22) on a side of the bracket that is opposite to the razor blade element (26).

5. The razor blade head (24) of any preceding claim wherein the bracket (22) is of a substantially E-shaped cross section or a substantially M-shaped cross section.

6. The razor blade head (24) of any preceding claim wherein the manual control element (22) comprises at least one groove (34) for receiving part of a finger of a user.

7. The razor blade head (24) of claim 6, wherein the manual control element (22) comprises two grooves (34) for receiving second (index) and third (middle) fingers of the user, respectively.

8. The razor blade head (24) of any preceding claim wherein the manual control element (22), the bracket (20) and the razor blade element (26) are formed as a single piece.

9. The razor blade head (24) of any of claims 1 to 7 wherein the bracket (20) comprises a clipping mechanism configured to connect the manual control element (22) and the razor blade element (26).

10. A razor (10) comprising the razor blade head (24) of any preceding claim and further comprising a handle (12).

11. The razor (10) of claim 10 wherein the razor blade head (24) is mounted on the handle (12) at a first end of the handle, the first end configured to sit between the thumb and fourth (ring) finger of a user.

12. The razor (10) of claim 11 wherein the handle (12) has a second end, opposite to the first end, the second end configured to allow the handle to stand upright on a substantially horizontal surface, wherein the second end of the handle is substantially concave.

13. The razor (10) of any of claims 10 to 12 wherein the handle (12) has a first, concave surface and a second, convex surface, the first and second surfaces being between the first and second ends of the handle, such that the handle has an asymmetrically curved profile.

14. The razor (10) of claim 13 wherein the second, convex surface of the handle (12) is configured to receive the thumb of the user.

15. The razor (10) of claim 14 wherein the second, convex surface of the handle (12) has a well configured to receive the thumb of the user.

16. A razor head (24), comprising:
a laser cutting element;
a bracket (20) mounted to the laser cutting element; and
a manual control element (22) configured to enable a user to apply force from a side of the bracket opposite to the laser cutting element, the force transferred from the manual control element to the laser cutting element via the bracket;
wherein the bracket is configured to define an opening between the manual control element and the laser cutting element.

## Patentansprüche

1. Rasierklingenkopf (24), umfassend:
ein Rasierklingenelement (26);
eine Halterung (20), die an das Rasierklingenelement befestigt ist; und
ein manuelles Steuerelement (22), das ausgelegt ist, um einem Benutzer zu ermöglichen, Kraft von einer Seite der Halterung, die dem Rasierklingenelement gegenüberliegt, anzuwenden, wobei die Kraft von dem manuellen Steuerelement über die Halterung an das Rasierklingenelement übertragen wird;
wobei die Halterung ausgestaltet ist, um eine Öffnung zwischen dem manuellen Steuerelement und dem Rasierklingenelement zu definieren.

2. Rasierklingenkopf (24) nach Anspruch 1, wobei das Rasierklingenelement (16) einen Rahmen (18) und einen Klingenabschnitt (16) umfasst, wobei der Rahmen ausgestaltet ist, um den Klingenabschnitt zu tragen.

3. Rasierklingenkopf (24) nach einem der Ansprüche 1 oder 2, wobei die Halterung (20) an dem Rahmen (18) des Rasierklingenelements (26) befestigt ist.

4. Rasierklingenkopf (24) nach einem vorhergehenden Anspruch, wobei die Halterung (20) mit dem manuellen Steuerelement (22) an einer Seite der Halterung, die dem Rasierklingenelement (26) gegenüberliegend ist, verbunden ist.

5. Rasierklingenkopf (24) nach einem vorhergehenden Anspruch, wobei die Halterung (22) einen im Wesentlichen E-förmigen Querschnitt oder einen im Wesentlichen M-förmigen Querschnitt aufweist.

6. Rasierklingenkopf (24) nach einem vorhergehenden Anspruch, wobei das manuelle Steuerelement (22) mindestens eine Einkerbung (34) zum Aufnehmen eines Teils eines Fingers eines Benutzers umfasst.

7. Rasierklingenkopf (24) nach Anspruch 6, wobei das manuelle Steuerelement (22) zwei Einkerbungen (34) zum Aufnehmen des zweiten bzw. dritten Fingers (Zeige- bzw. Mittelfingers) des Benutzers umfasst.

8. Rasierklingenkopf (24) nach einem vorhergehenden Anspruch, wobei das manuelle Steuerelement (22), die Halterung (20) und das Rasierklingenelement (26) als ein einziges Stück ausgebildet sind.

9. Rasierklingenkopf (24) nach einem der Ansprüche 1 bis 7, wobei die Halterung (20) einen Klippmechanismus umfasst, der ausgestaltet ist, um das manuelle Steuerelement (22) und das Rasierklingenelement (26) zu verbinden.

10. Rasierer (10), umfassend den Rasierklingenkopf (24) nach einem vorhergehenden Anspruch und ferner umfassend einen Griff (12).

11. Rasierer (10) nach Anspruch 10, wobei der Rasierklingenkopf (24) an dem Griff (12) an einem ersten Ende des Griffs befestigt ist, wobei das erste Ende ausgestaltet ist, um zwischen dem Daumen und dem vierten Finger (Ringfinger) eines Benutzers zu sitzen.

12. Rasierer (10) nach Anspruch 11, wobei der Griff (12) ein zweites Ende, dem ersten Ende gegenüberliegend, aufweist, wobei das zweite Ende ausgestaltet ist, um dem Griff zu ermöglichen, aufrecht auf einer im Wesentlichen horizontalen Oberfläche zu stehen, wobei das zweite Ende des Griffs im Wesentlichen konkav ist.

13. Rasierer (10) nach einem der Ansprüche 10 bis 12, wobei der Griff (12) eine erste konkave Fläche und eine zweite konvexe Fläche aufweist, wobei sich die erste und die zweite Fläche zwischen dem ersten und dem zweiten Ende des Griffs befinden, so dass der Griff ein asymmetrisch gekrümmtes Profil aufweist.

14. Rasierer (10) nach Anspruch 13, wobei die zweite konvexe Fläche des Griffs (12) ausgestaltet ist, um den Daumen des Benutzers aufzunehmen.

15. Rasierer (10) nach Anspruch 14, wobei die zweite konvexe Fläche des Griffs (12) eine Vertiefung aufweist, um den Daumen des Benutzers aufzunehmen.

16. Rasierkopf (24), umfassend:
ein Laserschneideelement;
eine Halterung (20), die an dem Laserschneideelement befestigt ist; und
ein manuelles Steuerelement (22), das ausgestaltet ist, um einem Benutzer zu ermöglichen, Kraft von einer Seite der Halterung, die dem Laserschneideelement gegenüberliegt, anzuwenden, wobei die Kraft von dem manuellen Steuerelement über die Halterung zum Laserschneideelement übertragen wird;
wobei die Halterung ausgestaltet ist, um eine Öffnung zwischen dem manuellen Steuerelement und dem Laserschneideelement zu definieren.

## Revendications

1. Tête à lame de rasoir (24), comprenant :
un élément de lame de rasoir (26) ;
une console (20) montée sur l'élément de lame de rasoir ; et
un élément de commande manuel (22) configuré de manière à permettre à un utilisateur d'appliquer une force à partir d'un côté de la console opposé à l'élément de lame de rasoir, la force étant transférée de l'élément de commande manuel à l'élément de lame de rasoir par l'intermédiaire de la console;
dans laquelle la console est configurée de manière à définir une ouverture entre l'élément de commande manuel et l'élément de lame de rasoir.

2. Tête à lame de rasoir (24) selon la revendication 1, dans laquelle l'élément de lame de rasoir (16) comprend un cadre (18) et une partie de lame (16), dans laquelle le cadre est configuré de manière à supporter la partie de lame.

3. Tête à lame de rasoir (24) selon l'une quelconque des revendications 1 ou 2, dans laquelle la console (20) est montée sur le cadre (18) de l'élément de lame de rasoir (26).

4. Tête à lame de rasoir (24) selon l'une quelconque des revendications précédentes, dans laquelle la console (20) est connectée à l'élément de commande manuel (22) sur un côté de la console qui est opposé à l'élément de lame de rasoir (26).

5. Tête à lame de rasoir (24) selon l'une quelconque des revendications précédentes, dans laquelle la console (22) présente une section transversale sensiblement en forme de E ou une section transversale sensiblement en forme de M.

6. Tête à lame de rasoir (24) selon l'une quelconque des revendications précédentes, dans laquelle l'élément de commande manuel (22) comporte au moins une rainure (34) destinée à recevoir une partie d'un doigt d'un utilisateur.

7. Tête à lame de rasoir (24) selon la revendication 6, dans laquelle l'élément de commande manuel (22) comporte deux rainures (34) destinées à recevoir les deuxième (index) et troisième (majeur) doigts de l'utilisateur, respectivement.

8. Tête à lame de rasoir (24) selon l'une quelconque des revendications précédentes, dans laquelle l'élément de commande manuel (22), la console (20) et l'élément de lame de rasoir (26) sont formés d'une seule pièce.

9. Tête à lame de rasoir (24) selon l'une quelconque des revendications 1 à 7, dans laquelle la console (20) comprend un mécanisme d'encliquetage configuré de manière à connecter l'élément de commande manuel (22) et l'élément de lame de rasoir (26).

10. Rasoir (10) comprenant la tête à lame de rasoir (24) selon l'une quelconque des revendications précédentes et comprenant en outre une poignée (12).

11. Rasoir (10) selon la revendication 10, dans lequel la tête à lame de rasoir (24) est montée sur la poignée (12) à une première extrémité de la poignée, la première extrémité étant configurée de manière à se loger entre le pouce et le quatrième (annulaire) doigt d'un utilisateur.

12. Rasoir (10) selon la revendication 11, dans lequel la poignée (12) présente une seconde extrémité, opposée à la première extrémité, la seconde extrémité étant configurée de manière à permettre à la poignée de se dresser verticalement sur une surface sensiblement horizontale, dans lequel la seconde extrémité de la poignée est sensiblement concave.

13. Rasoir (10) selon l'une quelconque des revendications 10 à 12, dans lequel la poignée (12) présente une première surface concave et une seconde surface convexe, les première et seconde surfaces étant situées entre les première et seconde extrémités de la poignée, de telle sorte que la poignée présente un profil courbe asymétrique.

14. Rasoir (10) selon la revendication 13, dans lequel la seconde surface convexe de la poignée (12) est configurée de manière à recevoir le pouce de l'utilisateur.

15. Rasoir (10) selon la revendication 14, dans lequel la seconde surface convexe de la poignée (12) présente une dépression configurée de manière à recevoir le pouce de l'utilisateur.

16. Tête de rasoir (24), comprenant :
un élément de coupe au laser ;
une console (20) montée sur l'élément de coupe au laser ; et
un élément de commande manuel (22) configuré de manière à permettre à un utilisateur d'appliquer une force à partir d'un côté de la console opposé à l'élément de coupe au laser, la force étant transférée de l'élément de commande manuel à l'élément de coupe au laser par l'intermédiaire de la console;
dans laquelle la console est configurée de manière à définir une ouverture entre l'élément de commande manuel et l'élément de coupe au laser.
